# EUROPEAN PATENT APPLICATION

(11) **EP 0 585 846 A1**
(43) Date of publication of application: **09.03.1994**
(21) Application number: 93113789.7
(22) Date of filing: 28.08.1993
(51) Int. Cl.: B29C 47/04, B29C 47/06, B29C 47/26

(54) **Multi layer plastic product, method of manufacturing same, and co-extruder**

(30) Priority: 01.09.1992 JP 257290/92
(71) Applicant: TOYO SEIKAN KAISHA, LTD., Tokyo 100 (JP)
(72) Inventor: Takeda, Isamu, Shibuya-ku, Tokyo 151 (JP)
(74) Representative: Reichel, Wolfgang, Dipl.-Ing.

(57) **Abstract**

The wall of a plastic product is made a laminated structure formed by colored resin layers and transparent resin layers. A transparent window (3) is formed at part of the circumference of the wall (10). The window is formed by removing the colored resin layer (6,8) at the window and filling the removed area with the transparent resin layer (5,11). Not all layers are discontinuous at the window area and other area of the wall, but at least one transparent layer is continuous over the whole circumference of the wall, thereby preventing the strength of the wall from being lowered at the window.

## Description

### BACKGROUND OF THE INVENTION

### Field of the Invention

The present invention relates to a multilayer plastic product, particularly a plastic product with a stripe pattern or a transparent window, such as bottles, tube containers, molded containers (including containers formed by drawing technique, vacuum technique, air pressure technique, vacuum/air pressure technique), bags, films, sheets, other types of containers, and tubes. The present invention also relates to a method of manufacturing a multilayer plastic product and to a multilayer co-extruder die head.

### Description of the Related Art

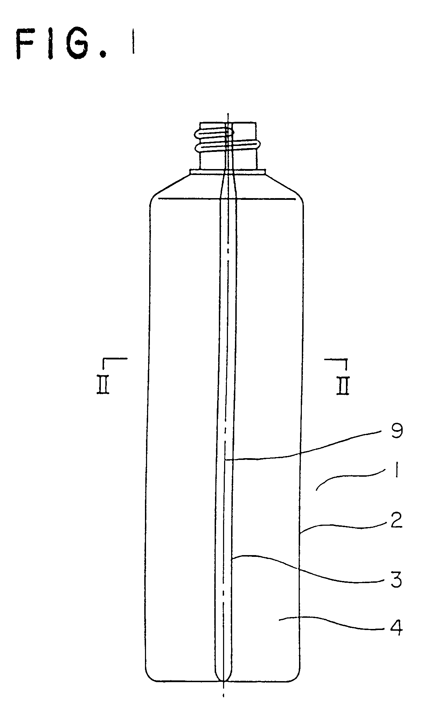

A multilayer wall structured plastic product is known in which part of the wall has a structure different from that of the other area. For example, a multilayer plastic tubular container having a colored resin layer is used for containing dental cream, liquid cleanser, cosmetics, or other liquid material or semi-solid material. In some cases, a stripe pattern or transparent window 3 such as shown in Fig.1 is formed at part of the wall of a multilayer plastic tubular container. Specifically, in many cases, the stripe pattern or transparent window is colored, or made transparent or semi-transparent, and the other area of the container wall is colored and made opaque. In such cases, the stripe pattern or window has a layer structure and material different from those of the other area of the wall.

Various techniques for forming a stripe pattern or transparent window on the container wall have been developed heretofore. A technique is known which has recently been disclosed in JP-A-2-162027. According to this technique of JP-A-2-162027, a transparent window can be advantageously formed by co-extrusion without cutting the barrier layer for intercepting the passing of oxygen. An example of the structure of the wall of a multilayer plastic tubular container manufactured by the technique of JP-A-2-162027 is illustratively shown in Fig.29. The frame 102 of this container 101 is formed by a wall 110 of a multilayer structure of a plurality of co-extruded and laminated resin layers. A transparent window 3 is formed at part of the wall in the frame circumferential direction in parallel with the center line of the container 101. The structure of the wall at the window 103 is different from that of the other area 104 of the wall.

The window 103 is formed at part of the wall in the frame circumferential direction in parallel with the center line, and the wall 110 is formed at the large other area 104. At the other area 104, the wall 110 is of a laminated structure of a plurality of co-extruded layers, including a first transparent resin layer 105, a first colored resin layer 106, a barrier layer 107, a second colored resin layer 108, and a second transparent resin layer 111, in this order from the inside to the outside of the wall 110.

A first adhesive layer 112 is interposed between the first colored resin layer 106 and the barrier layer 107, whereas a second adhesive layer 113 is interposed between the barrier layer 107 and the second colored resin layer 108. Therefore, at the other area 104, the wall 110 is formed by seven layers, including the first transparent resin layer 105, first colored resin layer 106, first adhesive layer 112, barrier layer 107, second adhesive layer 113, second colored resin layer 108, and second transparent resin layer 117, in this order from the inside to the outside of the wall 110.

At the window 103, the first colored resin layer 106 is removed by a width W1 in the circumferential direction, and a third transparent resin layer 120a is filled in this removed area. The second colored resin layer 108 is removed by a width W1 in the circumferential direction, and a fourth transparent resin layer 120b is filled in this removed area. Therefore, at the window 103, the wall 110 is formed by seven layers, including the first transparent resin layer 105, third transparent resin layer 120a, first adhesive layer 112, barrier layer 107, second adhesive layer 113, fourth transparent resin layer 120b, and second transparent resin layer 111. The first colored resin layer 106 and second colored resin layer 108 are opaque so that the other area 104 of the wall 110 is opaque as a whole.

On the other hand, the window 103 is transparent as a whole so that the content of the container 101 can be externally viewed. With this technique, however, although the barrier layer 107 is continuously formed throughout the circumference of the wall 110, the layer formed by the first colored resin layer 106 and the third transparent resin layer 120a and the layer formed by the second colored resin layer 108 and the fourth transparent resin layer 120b are both discontinuous at the intersection of each pair of two layers. As a result, there is a tendency that the strength of the window lowers.

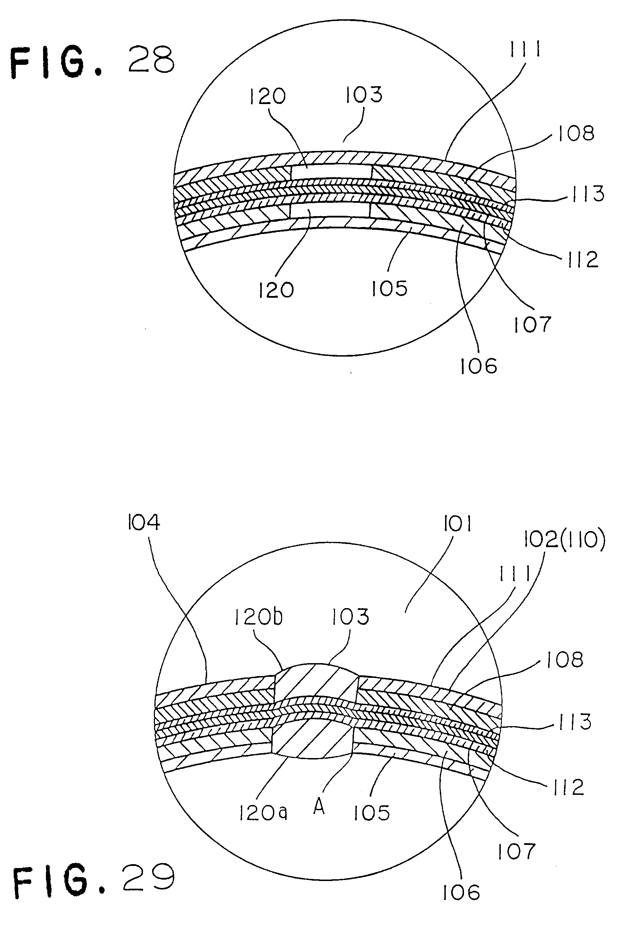

Moreover, it is necessary to use an extruder for supplying transparent resin of the third and fourth transparent resin layers 120a and 120b constituting the window 103 and an another extruder for supplying transparent resin of the first and second transparent resin layers 105 and 111 and for supplying colored resin of the first and second colored resin layers 106 and 108. As a result, the manufacturing cost rises, and the size and structure of the whole extruder become large and complicated. More important, it is difficult to adjust the extrusion conditions of a plurality of extruders to be same, thereby causing a difference of temperatures and pressures of the resins extruded by the extruders. Consequently, in manufacturing a multilayer plastic tubular container by using a plurality of resins, by molding a parison of the container with metal molds, and by manufacturing the container by blowing air into the parison, the wall of the parison is unable to be extended uniformly. The extension quantity differs depending upon the temperatures, pressures, or viscosities of resins even if the same blow pressure is used. As a result, a deformed area indicated at A in Fig.29 may be formed at the junction of the first colored resin layer 106 and the third transparent resin layer 120a, the third transparent resin layer 120a may become thick like a rib extending in parallel with the center line of the container if the extension force of the third transparent resin layer 120a is insufficient, or the barrier layer may be deformed. Further, the print quality at the outer surface of the container may be damaged, or it becomes difficult for the container to be smoothly squeezed or deformed to take out the contents thereof. Still further, a difference of the extension force between a plurality of resins may cause the width of the stripe pattern or window irregular, or may cause the shape of the stripe pattern or window to be nonlinear, in some times to become zigzag.

### SUMMARY OF THE INVENTION

It is therefore an object of the present invention to solve the above problems and to provide a plastic product such as a multilayer tubular container, a method of manufacturing the same, and a multilayer co-extruder die head used by this method, wherein even if the stripe pattern or transparent window is formed in the multilayer plastic container, the junction space between materials at the window will not extend between the inner and outer surfaces of the container so that the oxygen barrier faculty and the container strength will not be damaged, no deformation of the container frame is formed at the edge portion of the window, no unevenness and irregular swell is formed at the window, the container can be smoothly squeezed or deformed to take out the contents of the container, because the cross section of the edge portion of the transparent window is smooth and round, a good visual appearance can be ensured, it is not necessary to use an additional extruder, reducing the scale and cost of manufacturing machines, and simplifying the structure of machines.

In order to achieve the above object, there is provided a multilayer plastic product comprising: a multilayer structure of at least first and second co-extruded and laminated resin layers, part of the multilayer structure being different in structure from the remaining area of the multilayer structure, the first resin layer being removed from the different part, and the removed area being filled with the second resin layer.

According to another aspect of the present invention, there is provided a multilayer plastic product comprising: a multilayer structure of at least colored and transparent co-extruded and laminated resin layers, part of the multilayer structure being provided with a transparent window, the colored resin layer being removed at the transparent window, and the removed area being filled with the transparent resin layer.

According to another aspect of the present invention, there is provided a multilayer plastic product comprising: a multilayer structure of a continuous barrier layer and at least first and second resin layers formed on the outside, inside, or both the outside and inside of the continuous barrier layer, the barrier layer and the at least first and second resin layers being laminated together, part of the multilayer structure being different in structure from the remaining area of the multilayer structure, the first resin layer being removed from the different part, and the removed area being filled with the second resin layer.

According to an aspect of the present invention, there is provided a multilayer plastic product comprising: a multilayer structure of a continuous barrier layer and at least first and second resin layers formed on the outside, inside, or both the outside and inside of the continuous barrier layer with an adhesive layer or layers being interposed between the continuous barrier layer and the at least first and second resin layers, the barrier layer, the adhesive layer and the at least first and second layers being laminated together, part of the multilayer structure being different in structure from the remaining area of the multilayer structure, the first resin layer being removed from the different part, and the removed area being filled with the second resin layer.

According to another aspect of the present invention, there is provided a multilayer plastic product comprising: a multilayer structure of at least first and second co-extruded and laminated resin layers, the at least first and second layers being interposed with an adhesive layer, part of the multilayer structure being different in structure from the remaining area of the multilayer structure, the first resin layer being removed from the different part, and the removed area being filled with the second resin layer.

According to another aspect of the present invention, there is provided a multilayer plastic product comprising: a multilayer structure of at least first and second co-extruded and laminated resin layers, part of the multilayer structure being different in structure from the remaining area of the multilayer structure, the first resin layer being removed from the different part, the removed area being filled with the second resin layer, and the peripheral area of the first resin layer in contact with the second resin layer gradually changing the shape like chamfering.

According to another aspect of the present invention, there is provided a multilayer plastic product comprising: a multilayer structure of at least colored and transparent co-extruded and laminated resin layers, part of the multilayer structure being provided with a transparent window, the colored resin layer being removed at the transparent window, the removed area being filled with the transparent resin layer, and the transparent window being formed in a stripe shape with the longitudinal axis being aligned in the direction of co-extrusion.

According to another aspect of the present invention, there is provided a multilayer plastic product comprising: a multilayer structure of co-extruded laminated layers, part of the multilayer structure being provided with a transparent window, the multilayer structure being formed by a first transparent resin layer, a first adhesive layer, a barrier layer, a second adhesive layer, a colored resin layer, and a second transparent layer, in this order from the inside to the outside, or from the outside to the inside of the multilayer structure, part of the multilayer structure being different in structure from the remaining area of the multilayer structure, the colored layer being removed at the transparent window, the removed area being filled with the second transparent resin layer.

According to another aspect of the present invention, there is provided a co-extruding method for a plastic product having a multilayer structure of at least first and second co-extruded and laminated resin layers, part of the multilayer structure being different in structure from the remaining area of the multilayer structure, the first resin layer being removed from the different part, and the removed area being filled with the second resin layer, wherein a flow of the first resin is suppressed and a flow of the second resin is allowed preferentially by a width corresponding to the width of the removed area near at the converging point of adjacent passages for the first and second resins at the co-extrusion die head.

According to another aspect of the present invention, there is provided a co-extruding method for a plastic product having a multilayer structure of at least one or a plurality of colored resin layers, and one or a plurality of transparent resin layers or transparent adhesive layers, the at least one or a plurality of colored resin layers, and one or a plurality of transparent resin layers or transparent adhesive layers being co-extruded and laminated together, part of the multilayer structure being provided with a transparent window, the colored resin layer at the transparent window of the multilayer structure being removed, and the removed area being filled with the transparent resin layer or the transparent adhesive layer, wherein a flow of the colored resin is suppressed and a flow of the transparent resin or adhesive is allowed preferentially by a width corresponding to the width of the removed area near at the converging point of adjacent passages for the colored resin and transparent resin or adhesive at the co-extrusion die head.

According to another aspect of the present invention, there is provided a co-extruding method for a plastic product having a multilayer structure of at least one or a plurality of colored resin layers, and one or a plurality of transparent resin layers or transparent adhesive layers, the at least one or a plurality of colored resin layers, and one or a plurality of transparent resin layers or transparent adhesive layers being co-extruded and laminated together, part of the multilayer structure in the circumferential direction of the wall of the plastic product being provided with a transparent window in parallel with the center line of the plastic product, the colored resin layer at the wall of the transparent window being removed, and the removed area being filled with the transparent resin layer or the transparent adhesive layer, wherein a flow of the colored resin is suppressed and a flow of the transparent resin or adhesive is allowed preferentially by a width corresponding to the width of the removed area near at the converging point of adjacent passages for the colored resin and transparent resin or adhesive at the co-extrusion die head.

According to another aspect of the present invention, there is provided a co-extruder with a co-extrusion head for co-extruding a plastic product having a multilayer structure of at least first and second co-extruded and laminated resin layers, part of the multilayer structure being different in structure from the remaining area of the multilayer structure, the first resin layer being removed at the different part, and the removed area being filled with the second resin layer, wherein said co-extrusion die head has a first resin passage and a second resin passage with a converging point, and a flow limit member is mounted on the first resin passage, the flow limit member having a width corresponding to the width of the removed area near at the converging point.

According to the present invention, generally the whole area of the wall of a plastic product is formed in a laminated structure of a first resin layer such as a colored resin layer and a second resin layer such as a transparent resin layer, and part of the wall is made different in structure from the remaining area of the wall, for example, a transparent window is formed at part of the wall. The structure of the different part such as a transparent window of the wall is that the first resin layer such as a colored resin layer is removed and the second resin layer such as a transparent resin layer and an adhesive layer is filled in the removed area. Therefore, the second resin layer such as a transparent resin layer and an adhesive layer is continuous even at the different area such as a transparent window. Not all layers of the wall of a plastic product are discontinuous at the different area such as a transparent window and other area, but at least one transparent layer is continuous over the whole circumference of the wall, thereby preventing the oxygen interception faculty from being lowered by the formation of the different area such as a transparent window. The wall of such a structure is formed by plastic co- extrusion. The co-extrusion die head to be used for such a purpose suppresses a flow of the first resin such as colored resin at the area corresponding to the different area such as a transparent window.

### BRIEF DESCRIPTION OF THE DRAWINGS

Fig.1 is a front view of an example of a container.

Fig.2 is a cross section of the container wall shown in Fig.1 and taken along line II-II.

Fig.3 is an enlarged partial cross section of a container wall.

Fig.4 is an enlarged partial cross section of another container wall.

Fig.5 is an enlarged partial cross section of another container wall.

Fig.6 is an enlarged partial cross section of another container wall.

Fig.7 is an enlarged partial cross section of another container wall.

Fig.8 is an enlarged partial cross section of another container wall.

Fig.9 is an enlarged partial cross section of another container wall.

Fig.10 is an enlarged partial cross section of another container wall.

Fig.11 is an enlarged partial cross section of another container wall.

Fig.12 is an enlarged partial cross section of another container wall.

Fig.13 is an enlarged partial cross section of another container wall.

Fig.14 is an enlarged partial cross section of another container wall.

Fig.15 is an enlarged partial cross section of another container wall.

Fig.16 is an enlarged partial cross section of another container wall.

Fig.17 is an enlarged partial cross section of another container wall.

Fig.18 is an enlarged partial cross section of another container wall.

Fig.19 is a partial front view in section of a tube container.

Fig.20 is a partial front view in section of a tube.

Fig.21 is a partial front view in section of a cup.

Fig.22 is a perspective view illustrating a cup.

Fig.23 is a schematic plan view of a die set.

Fig.24 is a schematic plan view of a die set.

Fig.25 is a cross section illustrating a die head.

Fig.26 is an enlarged view illustrating the A area shown in Fig.25.

Fig.27 is an enlarged view illustrating the B area shown in Fig.25.

Fig.28 is an enlarged cross section showing a conventional container wall.

Fig.29 is an enlarged cross section showing a conventional transparent window of a container wall.

### DETAILED DESCRIPTION OF THE PREFERRED EMBODIMENTS

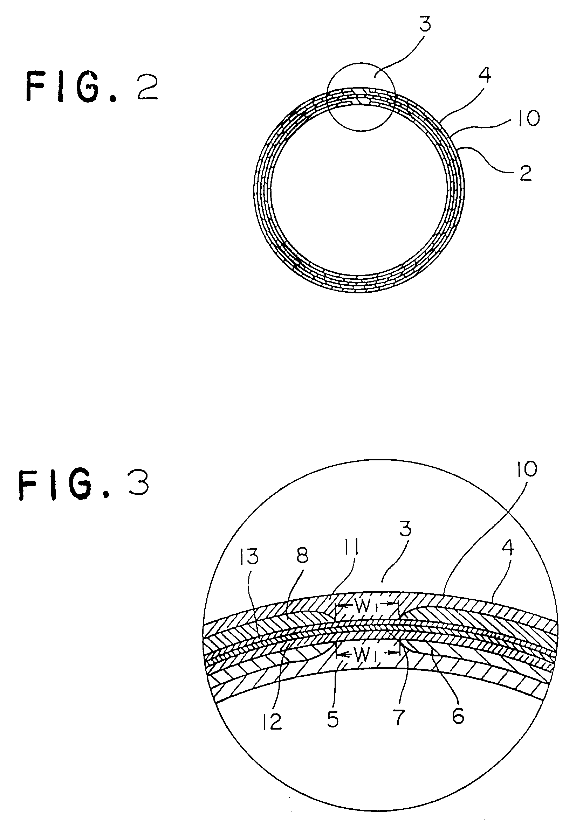

An embodiment of a multilayer tubular container according to the present invention will be described in detail with reference to the accompanying drawings. In Fig.1, reference numeral 1 generally represents a container having an outer frame 2. Fig.2 is a cross sectional view taken along line II-II of Fig.1. The frame 2 of the container 1 is of a multilayer structure, and has a container wall 10 made of a plurality of co-extruded laminated resin layers. Part of the circumferential periphery of the frame 2 is formed with a transparent window 3 extending in the direction parallel to the center line 9 of the container 1. The structure of the wall 10 at the window 3 is different from that at the other part of the wall 10.

The details of the structure of the wall 10 at the window 3 are shown in Fig.3. Namely, as shown in Fig.3, the wall 10 is constructed of part of the circumferential periphery of the frame 2 formed with the transparent window 3 extending in the direction parallel to the center line 9, and the other part 4. The other part 4 of the wall 10 is of a laminated structure made of a plurality of co-extruded layers, including a first transparent resin layer 5, a first colored resin layer 6, a barrier layer 7, a second colored resin layer 8, and a second transparent resin layer 11, in this order from the inside to the outside of the wall 10.

A first adhesive layer 12 is interposed between the first colored resin layer 6 and barrier layer 7, and a second adhesive layer 13 is interposed between the barrier layer 7 and second colored resin layer 8. Therefore, the other part 4 of the wall 10 is formed by the first transparent resin layer 5, first colored resin layer 6, first adhesive layer 7, barrier layer 7, second colored resin layer 8, and second transparent resin layer 11, in this order from the inside to the outside of the wall 10.

The wall 10 at the window 3 has the first colored resin layer 6 removed by a width W1 in the circumferential direction, the removed area being filled with the first transparent resin layer 5. In addition, the wall 10 at the window 3 has the second colored resin layer 8 removed by the width W1 in the circumferential direction, the removed area being filled with the second transparent resin layer 8. Therefore, the wall 10 at the window 3 is formed by five layers, including the first transparent resin layer 5, first adhesive layer 12, barrier layer 7, second adhesive layer 13, and second transparent resin layer 11. The first and second colored resin layers 6 and 8 are opaque so that the other part 4 of the wall 10 is opaque.

As the resin for the first and second transparent resin layers 5 and 11, light transmissive resin is used to make them transparent. The barrier layer 7 is made of transparent resin, and the first and second adhesive layers 12 and 13 are made of transparent adhesive. As a result, the window 3 is transparent as a whole, allowing a user to look at the contents of the container 1 externally. The removed areas for the first and second colored resin layers 6 and 8 are preferably aligned together in the circumferential direction. However, an allowance of about 0 to 3 mm may be set between both the removed areas. At the ends of the removed areas in the circumferential direction, an allowance of about 0 to 2 mm may be set.

As the transparent resin, any one of the following thermoplastic resins or a blend of two or more resins may be used. These thermoplastic resins include linear low-, very low-, low-, middle-, or high-density polyethylene, polyproplylene, ethylene-propylene copolymer, ethylene-vinyl acetate copolymer, olefin resin such as ionomer, polyester such as polyethylene terephthalate and polybutylene terephthalate, graft copolymer of methyl methacrylate with acrylonitrile-styrene copolymer or acrylonitrile-butadiene-styrene (ABS) copolymer, ABS, polymethyl methacrylate, and the like.

As the colored resin, any one of the above-described thermoplastic resins, a blend such as virgin resin, regrind or regenerated resin, or a mixture of virgin resin and regrind resin, may be used together with coloring agent such as commonly used pigment and dye. Dye has generally a large diffusion property, and so pigment is more preferable. As general pigments, there are bat orange, aniline black, titanium white, zinc sulfide, iron oxide, chrome yellow, chrome vermillion, cobalt blue, ultramarine blue, carbon black, azoic pigment, and the like. These pigments may be used singularly or plurally. The pigment content is dependent upon the type of pigment and the object of coloring. However, it is important from the view point of interlayer adhesion and other properties that the pigment content be set to 1.0 weight % or less, and more preferably 0.1 weight % or less.

As the resin for the barrier layer, any one of the following thermoplastic resins or a blend of two or more resins may be used. The most preferable resin is an ethylene-vinyl alcohol copolymer, particularly, the resin containing vinyl alcohol of 40 to 85 mole %, more preferably 50 to 80 mole %. Such an ethylene-vinyl alcohol copolymer may be obtained by saponificating at 96 % or more, more preferably at 99 % or more, a vinyl ester copolymer made of ethylene, or a compound of a large amount of ethylene and a small amount of olefin such as propylene, and low fatty acid such as vinyl formate, vinyl acetate, vinyl propionate, and the like.

Other resins for the barrier layer include nylon resins, particularly, nylon 6, nylon 8, nylon 11, nylon 12, nylon 6-6, nylon 6-10, nylon 10-6, and nylon 6-6-6 copolymer. Hi-nitril resin, vinylidene chloride resin, vinyl chloride resin may also be used. As oxygen barrier resin, a so-called blend resin may be used. For example, a blend resin of ethylene-vinyl alcohol copolymer and nylon resin, or a blend resin of ethylene-vinyl alcohol and other resin such as polyethylene, ethylene-vinyl acetate copolymer, and ionomer, may be used.

The adhesive layer is interposed if there is no adhesive power between the transparent resin layer and barrier resin layer. As the resin for the adhesive layer, any resin may be used if it has an adhesive power relative to both the transparent resin layer and barrier resin layer. As such adhesive resin, there are a blend resin of thermoplastic polymers and other thermoplastic polymers or copolymers containing the carbonyl with the functional group such as free carboxylic acid, carboxylic acid base, carboxylic acid ester, carboxylic acid amide, carboxylic acid anhydride, carbonic acid ester, urethane, and urea. The carbonyl content of the thermoplastic copolymer is preferably 10 to 1400 mili mole per 100 g polymer, or more preferably 30 to 1200 mili mole per 100 g polymer. Preferable adhesive resin is polyolefin modified with at least one type of ethylene groups such as unsaturated carboxylic acid, acid anhydride, ester, and amide, particularly, polypropylene, high density polyethylene, low density polyethylene, and ethylene-vinyl acetate copolymer, respectively modified with maleic acid, acrylic acid, methacrylic acid, crotonic acid, fumaric acid, itaconic acid, maleic acid anhydride, itaconic acid anhydride, citraconic acid anhydride, ethyl acrylic, methyl methacrylate, ethyl maleate, 2-ethylhexyl acrylate, acrylamide, methacrylic acid amide, coconut oil fatty acid amide, or maleic imide. Other materials include ethylene-acrylate copolymer, ionomer (Serlin A of Du Pont), polyalkylene oxide-polyester block copolymer, carboxymethyl cellulose derivative, and a blend of one of these materials and polyolefin.

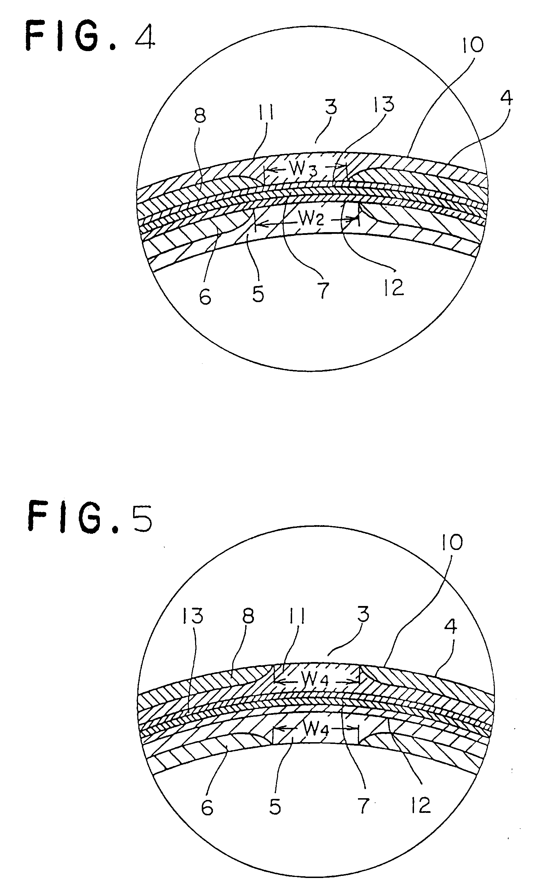

In another embodiment shown in Fig.4, the width W2 of the removed area of the first colored resin layer 6 at the window 3 is larger than the width W3 of the removed area of the second colored resin layer 8. Because the width W3 is smaller than the width W2, the edges of the window 3 as viewed externally can be recognized clearly.

In an embodiment shown in Fig.5, the other part 4 of the wall 10 is formed by a first colored resin layer 6, a first transparent resin layer 5, a first adhesive layer 12, a barrier layer 7, a second adhesive layer 13, a second transparent resin layer 11, and a second colored resin layer 8, in this order from the inside to the outside of the wall 10. The first and second colored resin layers 6 and 8 at the window 3 are removed by a width W4 in the circumferential direction, the removed areas being filled with the first and second transparent resin layers 5 and 11.

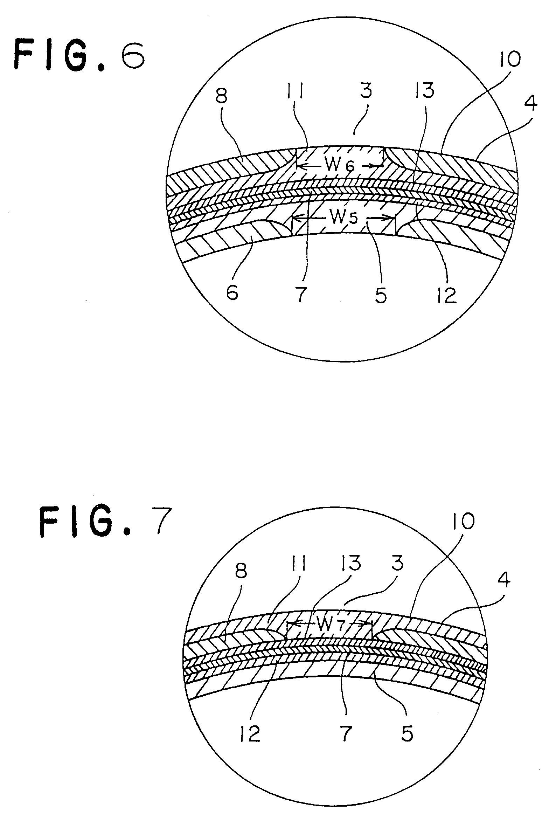

In an embodiment shown in Fig.6, the laminated structure of the wall 10 is substantially the same as that of the embodiment shown in Fig.5. However, the width W5 of the removed area of the first colored resin layer 6 at the window is larger than the width W6 of the removed area of the second colored resin layer 8.

In an embodiment shown in Fig.7, the wall 10 is formed by a first transparent resin layer 5 and a first adhesive layer 12 on the inner side of a barrier layer 7, and by a second adhesive layer 13, a second colored resin layer 8, and a second transparent resin layer 11 on the outer side of the barrier layer 7. The second colored resin layer 8 is removed by a width W7 in the circumferential direction, the removed area being filled with the second transparent resin layer 11 to form the transparent window 3.

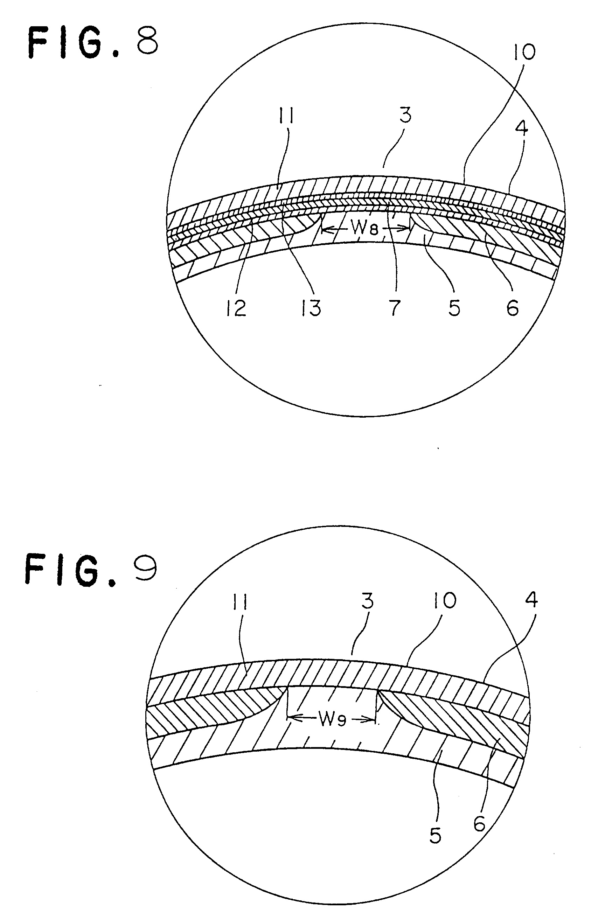

In an embodiment shown in Fig.8, the wall 10 is formed by a first transparent resin layer 5, a first colored resin layer 6, and a first adhesive layer 12 on the inner side of a barrier layer 7. The first colored resin layer 6 is removed by a width W8 in the circumferential direction, the removed area being filled with the first transparent resin layer 5. The wall 10 is also formed on the outer side of the barrier layer 7 by a second adhesive layer 13 and a second transparent resin layer 11.

In an embodiment shown in Fig.9, the wall 10 is formed by three layers including a first transparent resin layer 5, a first colored resin layer 6, and a second transparent resin layer 11, in this order from the inside to the outside of the wall 10. At the window 3, the first colored resin layer 6 is removed by a width W8, the removed area being filled with the first transparent resin layer 5. An adhesive layer may be interposed between the colored resin layer and transparent resin layers.

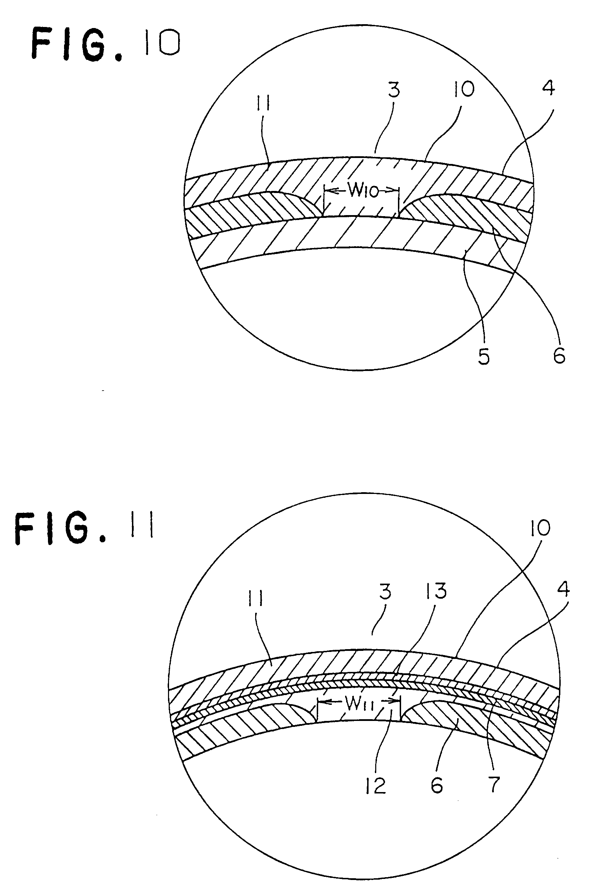

In an embodiment shown in Fig.10, the wall 10 is formed by three layers including a first transparent resin layer 5, a first colored resin layer 6, and a second transparent resin layer 11, in this order from the inside to the outside of the wall 10. At the window 3, the first colored resin layer 6 is removed by a width W9, the removed area being filled with the second transparent resin layer 11. An adhesive layer may be interposed between the colored resin layer and transparent resin layers.

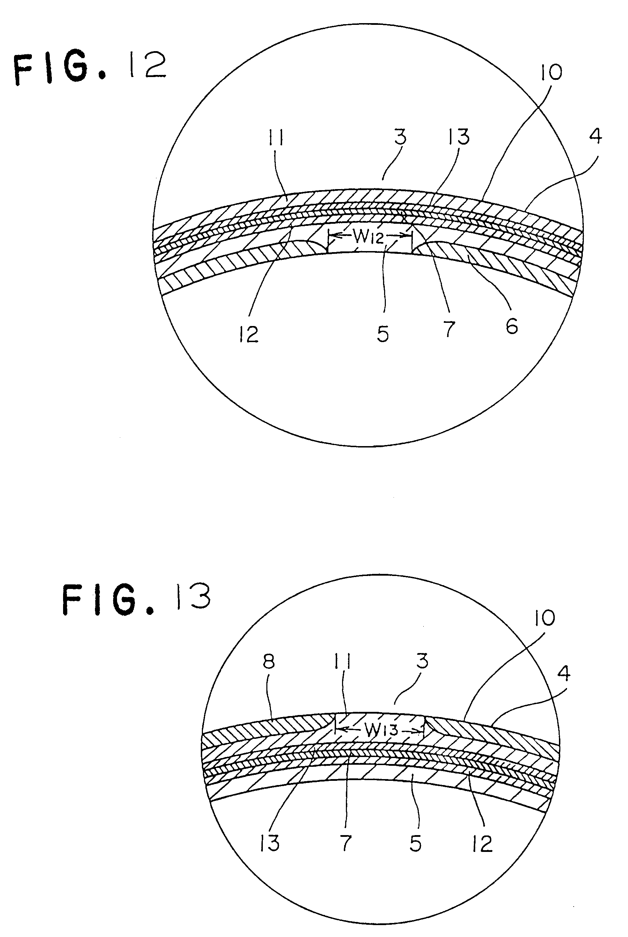

In an embodiment shown in Fig.11, the other part 4 of the wall 10 is formed by a first colored layer 6 and a first adhesive layer 12 on the outer side of a barrier layer 7, and by a second adhesive layer 13 and a second transparent resin layer 11 on the outer side of the barrier layer 7. At the window 3, the first colored resin layer 6 is removed by a width W10, the removed area being filled with the first adhesive layer 12.

In an embodiment shown in Fig.12, the other part 4 of the wall 10 is formed by a first colored resin layer 6, a first transparent resin layer 5, and a first adhesive layer 12 on the inner side of a barrier layer 7, and by a second adhesive layer 13 and a second transparent resin layer 11 on the outer side of the barrier layer 7. At the window, the first colored resin layer 6 is removed by a width W11, the removed area being filled with the first transparent resin layer 5 to form the transparent window 3.

In an embodiment shown in Fig.13, the other part 4 of the wall 10 is formed by a first transparent resin layer 5 and a first adhesive layer 12 on the inner side of a barrier layer 7, and by a second adhesive layer 13, a second transparent resin layer 11, and a second colored resin layer 8 on the outer side of the barrier layer 7. At the window 3, the second colored resin layer 8 is removed by a width W12 in the circumferential direction, the removed area being filled with the second transparent resin layer 11.

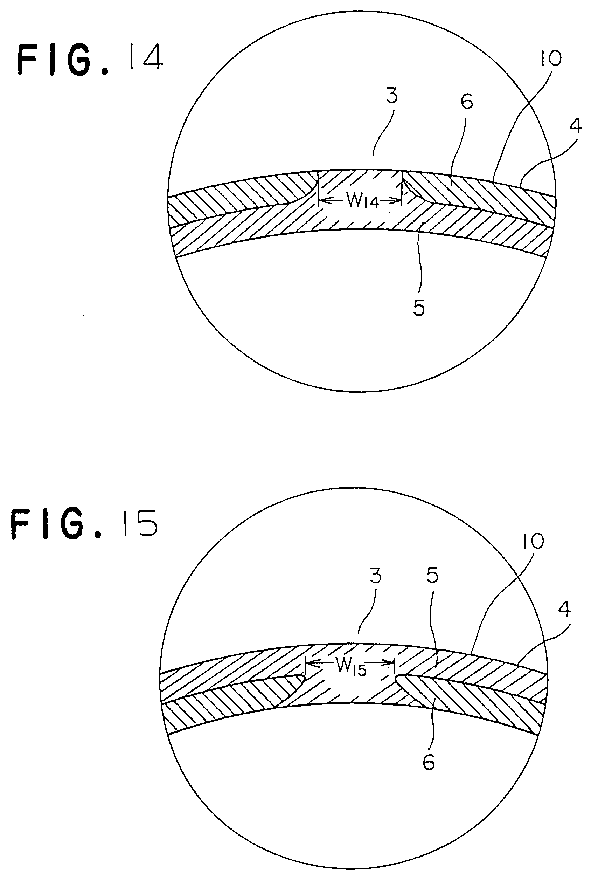

In an embodiment shown in Fig.14, the other part 4 of the wall 10 is formed by a first transparent resin layer 5 and a first colored resin layer 6 in this order from the inside to the outside of the wall 10. At the window 3, the first colored resin layer 6 is removed by a width 14, the removed area being filled with the first transparent resin layer 5. An adhesive layer may be interposed between the colored resin layer and transparent resin layer.

In an embodiment shown in Fig.15, the other part 4 of the wall 10 is formed by a first colored resin layer 6 and a first transparent resin layer 5 in this order from the inside to the outside of the wall 10. At the window 3, the first colored resin layer 6 is removed by a width W15 in the circumferential direction, the removed area being filled with the first transparent resin layer 5.

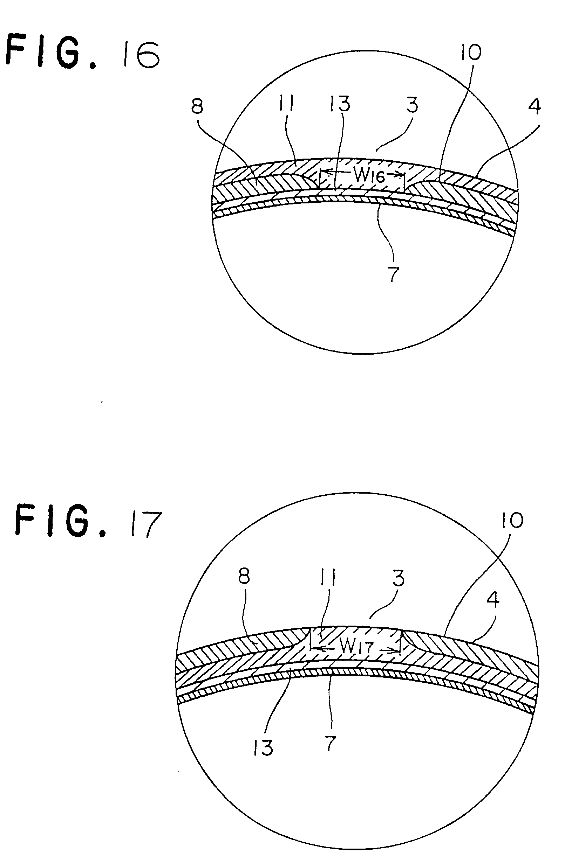

In an embodiment shown in Fig.16, the other part 4 of the wall 10 is formed by a barrier layer 7, a second adhesive layer 13, a second colored resin layer 8, and a second transparent resin layer 11, in this order from the inside to the outside of the wall 11. At the window 3, the second colored resin layer 8 is removed by a width W16 in the circumferential direction, the removed area being filled with the second transparent resin layer 11.

In an embodiment shown in Fig.17, the other part 4 of the wall 10 is formed by a barrier layer 7, a second adhesive layer 13, a second transparent resin layer 11, and a second colored resin layer 8 in this order from the inside to the outside of the wall 10. At the window 3, the first colored resin layer 6 is removed by a width W17, the removed area being filled with the second transparent resin layer 11.

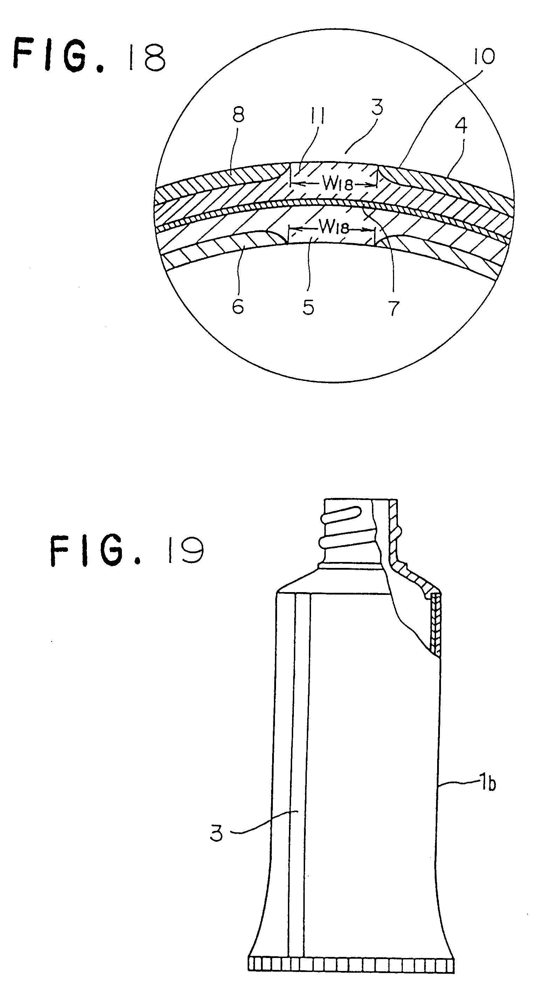

In an embodiment shown in Fig.18, the other part 4 of the wall 10 is formed by a first colored resin layer 6, a first transparent resin layer 5, a barrier layer 7, a second transparent resin layer 11, and a second colored resin layer 8, in this order from the inside to the outside of the wall 10. At the window 3, the first colored resin layer 6 is removed by a width W18 in the circumferential direction, the removed area being filled with the first transparent resin layer 5, whereas the second colored resin layer 8 is removed by the width W18 in the circumferential direction, the removed area being filled with the second transparent resin layer 11.

In the above embodiments, the transparent window of the container is formed not by using special material dedicated to the window but by removing the colored resin layer at the window and by filling the removed area with the transparent resin layer and/or transparent adhesive layer. Therefore, the transparent resin and/or adhesive layer is continuously formed over the whole circumferential area of the container without any discontinuity. At least one transparent layer is continuous throughout the whole circumferential area, posing no problem of a lowered oxygen interception faculty which might otherwise be caused by the formation of a conventional window.

Further, because the same resin is used both at the window and at the other area of the wall, it is possible to manufacture a container by using a single extruder, without a need of another extruder for forming the window. As a result, the same extrusion conditions such as temperature, pressure, and viscosity can be applied for the formation of both the window and the other area. Even if a parison formed by metal molds for a plastic laminated tubular container is blow-molded to manufacture the tubular container, the same pressure condition is applied to both the window and the other area. As a result, the container frame at the edges of the window will not deformed, there is no uneven thickness or irregular expansion of the transparent resin layer and/or barrier layer at the window, the good print quality at the outer surface of the container can be obtained, the container can be smoothly squeezed or deformed to take out the contents thereof.

Furthermore, because the cross section of the edge portion of the transparent window is smooth and round, a good visual appearance can be ensured.

Still further, it is not necessary to use an additional extruder, reducing the scale and cost of manufacturing machines, and simplifying the structure of machines.

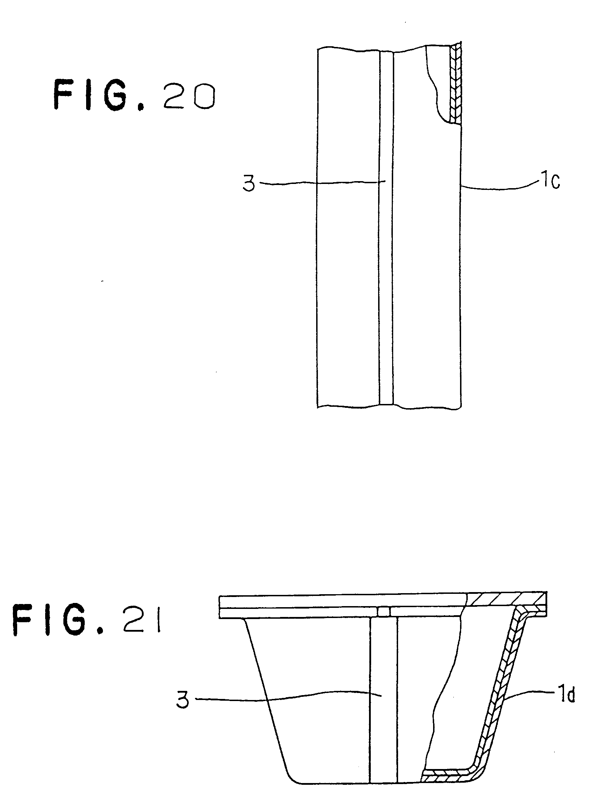

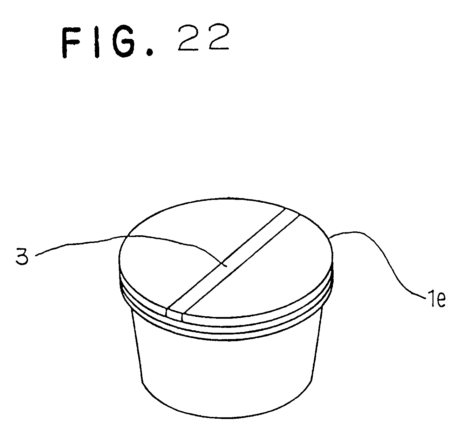

The laminated structure of the window 3 and the other area 4 of the wall 10 of the container 1 is not limited to the above embodiments only, but various modifications are possible. For example, the number of barrier layers may be two or more, the number of layers may be seven or more, the shape of the window may be a rectangle, a circle, or other desired configurations. In the above embodiments, a laminated tubular container has been described by way of example as a plastic product to which the present invention is applied. Other plastic products may be manufactured, such as a tube container 1b having a transparent window 3 formed in the container frame shown in Fig.19, a tube 1c having a transparent window 3 formed in its wall shown in Fig.20, a cup 1d having a transparent window 3 formed in its side wall shown in Fig.21, and a cap 1c for a cup container having a transparent window 3 formed in the cap shown in Fig.22.

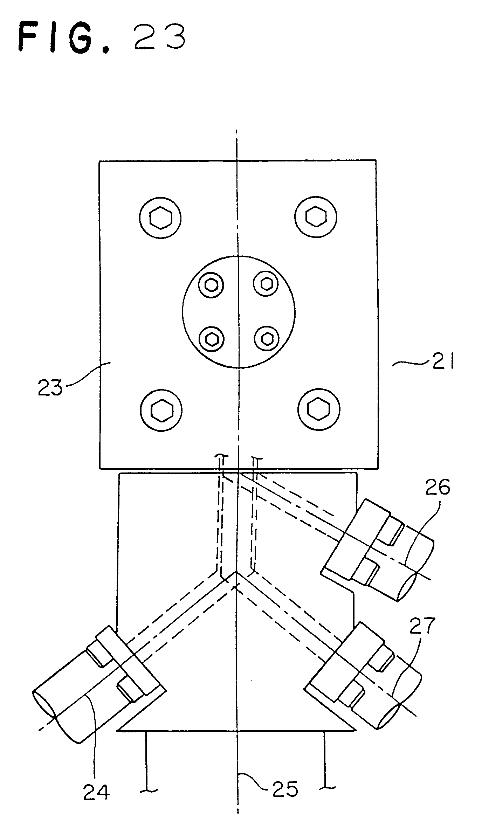

Next, a method of co-extruding a container wall 10 described above, and a die head to be used by the method, will be described. In the following description, a container having the container wall like that shown in Fig.3 will be manufactured illustratively. As shown in Fig.3, this wall 10 at the area 4 excepting the window 3 area is a laminated structure made of seven layers, including a first transparent resin layer 5, a first colored resin layer 6, a first adhesive layer 12, a barrier layer 7, a second adhesive layer 13, a second colored resin layer 8, and a second transparent resin layer 11, in this order from the inside to the outside of the wall 10. At the transparent window 3, the first and second colored resin layers 6 and 8 are removed, the removed areas being filled with the first and second transparent resin layers 5 and 11. The wall 10 at the window 3 is therefore formed by the five layers, including the first transparent resin layer 5, first adhesive layer 12, barrier layer 7, second adhesive layer 13, and second transparent resin layer 11. In Figs.23, 24, and 25, reference numeral 21 generally represents a die set having a die 22 from which a product is extruded and a head 23 coupled to the inlet of the die 22 for the supply of resin material.

Connected to the head 23 are a transparent resin supply line 24, a colored resin supply line 25, a barrier material supply line 26, and an adhesive supply line 27. A core metal 28 is mounted at the center of the head 23. A tubular first transparent resin extrusion passage 31 is formed on the outside of the core metal 28 by a first transparent resin extrusion metal jig 30. A first colored resin extrusion passage 33 is formed on the outside of the first transparent resin extrusion passage 31 by a first colored resin extrusion metal jig 32. On the outside of the first colored resin extrusion passage 33, a first adhesive extrusion passage 35 is formed by a first adhesive extrusion metal jig 34.

On the outside of the first adhesive extrusion passage 35, a barrier material extrusion passage 37 is formed by a barrier material extrusion metal jig 36. On the outside of the barrier material extrusion passage 37, a second adhesive extrusion passage 41 is formed by a second adhesive extrusion metal jig 38. On the outside of the second adhesive extrusion passage 41, a second colored resin extrusion passage 43 is formed by a second colored resin extrusion metal jig 42. On the outside of the second colored resin extrusion passage 43, a second transparent resin extrusion passage 45 is formed by a second transparent resin extrusion metal jig 44.

At the converging point 46 under the outlet of the first transparent resin extrusion passage 31, the outlet of the first colored resin extrusion passage 33 is positioned outside of the converging point 46. At the next converging point 47, the outlet of the first adhesive extrusion passage 35 is positioned outside of the converging point 47. At the next converging point 48, the outlet of the barrier material extrusion passage 37 is positioned outside of the converging point 48. At the next converging point 51, the outlet of the second adhesive extrusion passage 41 is positioned outside of the converging point 51. At the next converging point 52, the outlet of a converging passage 53 is positioned. At the converging point 49 upstream of the converging passage 53, the outlet of the second colored resin extrusion passage 43 is positioned inside of the outlet of the second transparent resin extrusion passage 45, to converge the two passages 43 and 45.

The first transparent resin extrusion passage 31 is connected to the first transparent resin supply line 54 which is in turn connected to the transparent resin supply line 24. The first colored resin extrusion passage 33 is connected to the first colored resin supply line 55 which is in turn connected to the colored resin supply line 25.

The first adhesive extrusion passage 35 is connected to the first adhesive supply line 56 which is in turn connected to the adhesive supply line 27. The barrier material extrusion passage 37 is connected via the barrier supply line 57 to the barrier supply line 26. The second adhesive extrusion passage 41 is connected to the second adhesive supply line 58 which is in turn connected to the adhesive supply line 27. The second colored resin extrusion passage 43 is connected to the second colored resin supply line 61 which is in turn connected to the colored resin supply line 25. The second transparent resin extrusion passage 45 is connected to the transparent resin supply line 62 which is in turn connected to the transparent resin supply line 24.

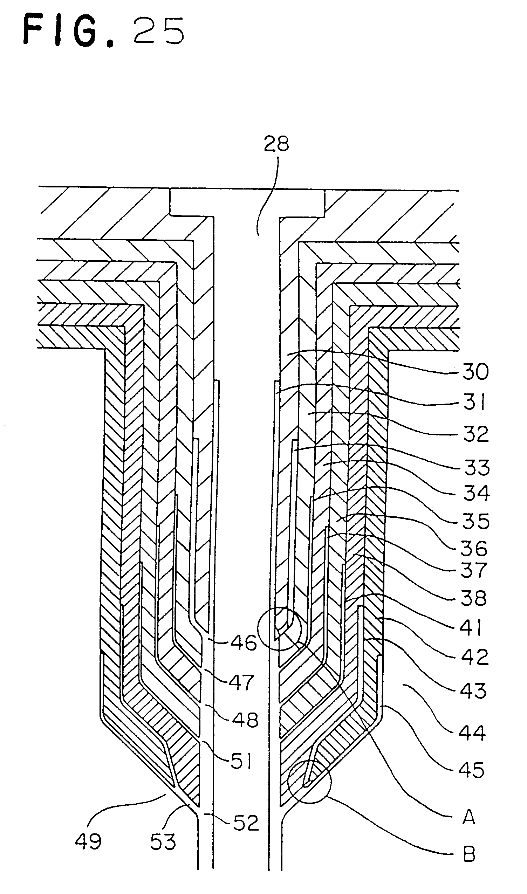

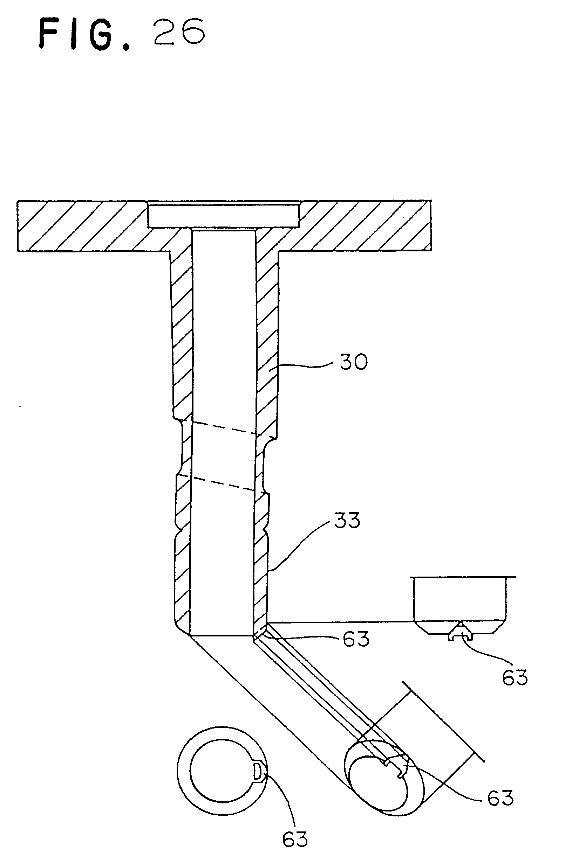

Attention is to be paid to the structure of the converging point 46 between the first transparent resin extrusion passage 31 and the first colored resin extrusion passage 33, and to the structure of the converging point 49 between the second colored resin extrusion passage 43 and the second transparent resin extrusion passage 45. Namely, at the converging point 46, the outlets of the first transparent resin extrusion passage 31 and the first colored resin extrusion passage 33 are disposed concentrically to be open over substantially the whole circumference of the wall 10, i.e., at the other area 4 of the wall 10. However, at the window 3 of the wall 10, i.e., at the area A (indicated in Fig.25), a flow limit member 63 extends into the first colored resin extrusion passage 32 as shown in Fig.26, the member 63 having the width corresponding to the window 3 in the circumferential direction. As a result, the first colored resin is not supplied at the area A, and only the first transparent resin is supplied. The first colored resin layer 6 is removed therefore at the window 3 of the wall 10 to realize the structure that the first transparent resin layer 5 is filled in the removed area.

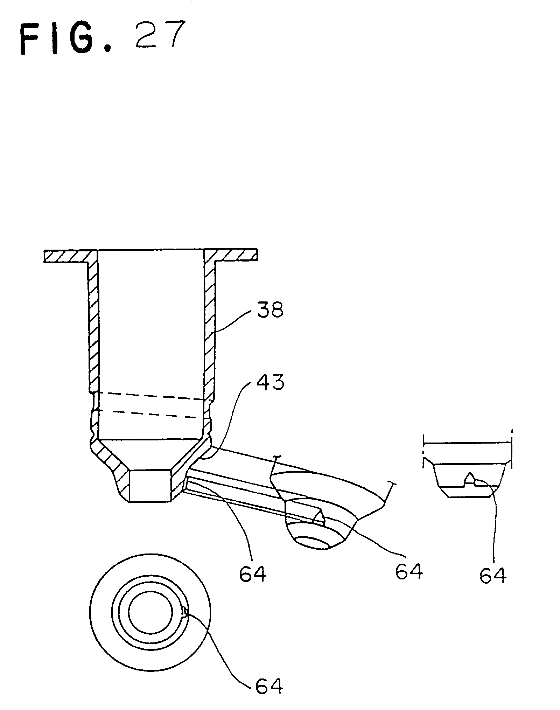

At the converging point 49, the outlets of the second transparent resin extrusion passage 45 and the second colored resin extrusion passage 43 are disposed concentrically to be open over substantially the whole circumference of the wall 10, i.e., at the other area 4 of the wall 10. However, at the window 3 of the wall 10, i.e., at the area B (indicated in Fig.25), a flow limit member 64 extends into the second colored resin extrusion passage 43 as shown in Fig.27, the member 64 having the width corresponding to the window 3 in the circumferential direction. As a result, the second colored resin is not supplied at the area B, and only the second transparent resin is supplied. The second colored resin layer 8 is removed therefore at the window 3 of the wall 10 to realize the structure that the second transparent resin layer 11 is filled in the removed area.

### (Experiment)

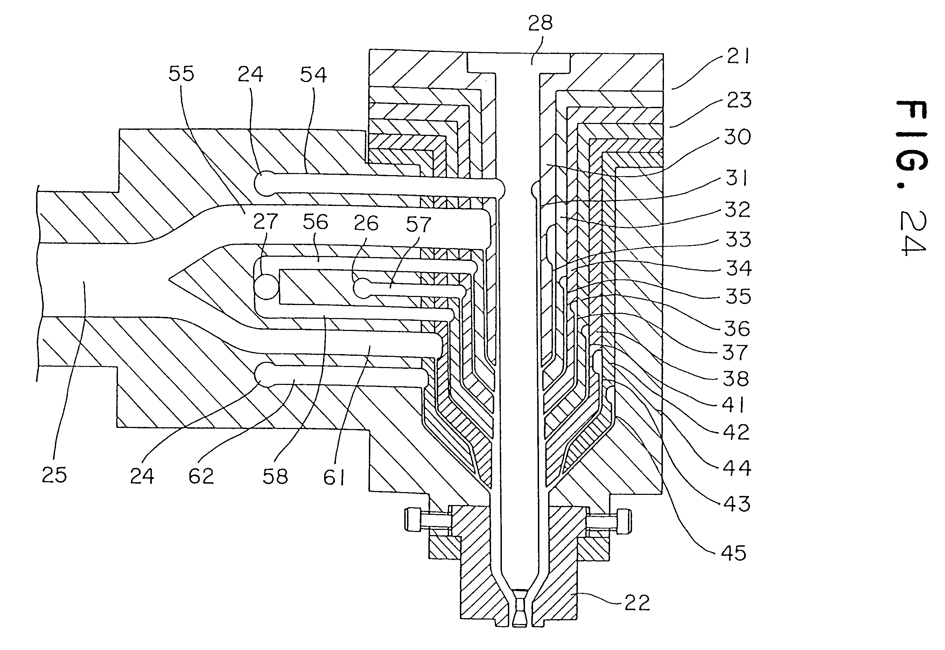

A multi layer co-extruder having the structure described below was used for this experiment. Namely, the co-extruder has four extruders and the 7-layer die head shown in Fig.24. The first extruder is a barrier layer extruder having a screw with a diameter of 40 mm and an effective length of 800 mm. The second extruder is a transparent resin layer extruder having a screw with a diameter of 65 mm and an effective length of 1430 mm and an adapter with a bifurcated melt channel. The third extruder is an adhesive layer extruder having a screw with a diameter of 40 mm and an effective length of 800 mm and an adapter with a bifurcated melt channel. The fourth extruder is a colored resin layer extruder having a screw with a diameter of 90 mm and an effective length of 1980 mm and an adapter with a bifurcated melt channel. An ethylene-vinyl alcohol copolymer was supplied to the first extruder, the copolymer being formed by ethylene content 30 mole %, vinyl alcohol content 69.5 mole %, and vinyl acetate content 0.5 mole %. Low density polyethylene of a melt index of 0.5 was supplied to the second extruder. Maleic acid modified polyethylene at a modification factor of 1.0% was supplied to the third extruder. A mixture of bottle regrind 50 %, low density polyethylene 45 %, and titanium oxide added and colored low density polyethylene master batch 5 % was supplied to the fourth extruder. A melted multilayer parison was formed under the extrusion conditions of a resin temperature of 210 °C and a resin pressure of 150 kg/cm². The parison was held by metal molds to form a bottle at a blow pressure of 5 kg/cm². Manufactured bottles such as shown in Fig.3 had the dimension of a wall thickness of 0.7 mm (transparent resin layer = 0.10 mm, colored resin layer = 0.20 mm, adhesive layer = 0.03 mm, and barrier layer = 0.04 mm), a window width of 5 mm, and a capacity of 550 ml. Each bottle filled with 500 ml water of 5 °C and capped was dropped from the height of 2.0 m in an upright position. The results of the drop test are shown in Table 1.

### (Comparison)

A comparison drop test was performed for bottles such as shown in Fig.28 manufactured by a conventional technique disclosed in JP-A-2-162027 and having the colored resin layer replaced by low density polyethylene with a melt index of 0.5 by a width of 5 mm. The results are shown in Table 1.

**Table 1**

| | |
|---|---|
| Specimen | Drop Test |
| | Bottles with Broken Window/Tested Bottles |
| Experiment | 0/100 bottles |
| Comparison | 3/100 bottles |

In Table 1, the bottle with a broken window means a bottle with a window whose transparent resin layer had a crack or a bottle whose transparent and colored resin layers were peeled off.

According to the plastic multilayer container of the above embodiments, the quantity of contents in the container can be recognized through the transparent window. Although the colored resin is removed from the window, the transparent plastic layer is continuously formed on the whole circumference of the container wall so that the oxygen interception faculty will not be degraded at the window. The colored resin can be replaced by the transparent resin simply by mounting the flow limit member on the resin passage of the co-extruder die head. Therefore, a multilayer plastic container with a stripe-shaped transparent window can be easily manufactured without using a particular co-extruder, thereby dispensing with installation cost and space of such a particular co-extruder. In addition, the maintenance labor and running cost for such a particular co-extruder are not necessary. The die head structure is simpler than a conventional die head so that the manufacturing cost and maintenance of the die head can be reduced.

Still further, the colored resin can be smoothly and easily replaced by the transparent resin. If the removed area has sharp edges, the breaking stress such as stress in the circumferential direction and bending stress concentrates on the sharp edges so that a crack is likely to be generated in the transparent resin from the sharp edges, or the transparent and colored resin layers are likely to be peeled off. In contrast, according to the present invention, such a crack and peel-off to be caused by stress concentration will not occur because the edge portion of the colored resin layer at the window gradually changes its shape and takes generally a convex round in a manner like chamfering.

## Claims

1. A multilayer plastic product comprising:
a multilayer structure of at least first and second co-extruded and laminated resin layers, part of said multilayer structure being different in structure from the remaining area of said multilayer structure, said first resin layer being removed from said different part, and the removed area being filled with said second resin layer.

2. A multilayer plastic product comprising:
a multilayer structure of at least colored and transparent co-extruded and laminated resin layers, part of said multilayer structure being provided with a transparent window, said colored resin layer being removed at said transparent window, and the removed area being filled with said transparent resin layer.

3. A multilayer plastic product comprising:
a multilayer structure of a continuous barrier layer and at least first and second resin layers formed on the outside, inside, or both the outside and inside of said continuous barrier layer, said barrier layer and said at least first and second resin layers being laminated together, part of said multilayer structure being different in structure from the remaining area of said multilayer structure, said first resin layer being removed from said different part, and the removed area being filled with said second resin layer.

4. A multilayer plastic product comprising:
a multilayer structure of a continuous barrier layer and at least first and second resin layers formed on the outside, inside, or both the outside and inside of said continuous barrier layer with an adhesive layer or layers being interposed between said continuous barrier layer and said at least first and second layers, said barrier layer, said adhesive layer and said at least first and second layers being laminated together, part of said multilayer structure being different in structure from the remaining area of said multilayer structure, said first resin layer being removed from said different part, and the removed area being filled with said second resin layer.

5. A multilayer plastic product comprising:
a multilayer structure of at least first and second co-extruded and laminated resin layers, said at least first and second layers being interposed with an adhesive layer, part of said multilayer structure being different in structure from the remaining area of said multilayer structure, said first resin layer being removed from said different part, and the removed area being filled with said second resin layer.

6. A multilayer plastic product comprising:
a multilayer structure of at least first and second co-extruded and laminated resin layers, part of said multilayer structure being different in structure from the remaining area of said multilayer structure, said first resin layer being removed from said different part, the removed area being filled with said second resin layer, and the peripheral area of said first resin layer in contact with said second resin layer gradually changing the shape like chamfering.

7. A multilayer plastic product comprising:
a multilayer structure of at least colored and transparent co-extruded and laminated resin layers, part of said multilayer structure being provided with a transparent window, said colored resin layer being removed at said transparent window, the removed area being filled with said transparent resin layer, and said transparent window being formed in a stripe shape with the longitudinal axis being aligned in the direction of co-extrusion.

8. A multilayer plastic product comprising:
a multilayer structure of co-extruded laminated layers, part of said multilayer structure being provided with a transparent window, said multilayer structure being formed by a first transparent resin layer, a first adhesive layer, a barrier layer, a second adhesive layer, a colored resin layer, and a second transparent layer, in this order from the inside to the outside, or from the outside to the inside of said multilayer structure, part of said multilayer structure being different in structure from the remaining area of said multilayer structure, said colored layer being removed at said transparent window, the removed area being filled with said second transparent resin layer.

9. A co-extruding method for a plastic product having a multilayer structure of at least first and second co-extruded and laminated resin layers, part of said multilayer structure being different in structure from the remaining area of said multilayer structure, said first resin layer being removed from said different part, and the removed area being filled with said second resin layer, wherein a flow of said first resin is suppressed and a flow of said second resin is allowed preferentially by a width corresponding to the width of the removed area near at the converging point of adjacent passages for said first and second resins at the co-extrusion die head.

10. A co-extruding method for a plastic product having a multilayer structure of at least one or a plurality of colored resin layers, and one or a plurality of transparent resin layers or transparent adhesive layers, said at least one or a plurality of colored resin layers, and one or a plurality of transparent resin layers or transparent adhesive layers being co-extruded and laminated together, part of said multilayer structure being provided with a transparent window, said colored resin layer at said transparent window of said multilayer structure being removed, and the removed area being filled with said transparent resin layer or said transparent adhesive layer, wherein a flow of said colored resin is suppressed and a flow of said transparent resin or adhesive is allowed preferentially by a width corresponding to the width of the removed area near at the converging point of adjacent passages for said colored resin and transparent resin or adhesive at the co-extrusion die head.

11. A co-extruding method for a plastic product having a multilayer structure of at least one or a plurality of colored resin layers, and one or a plurality of transparent resin layers or transparent adhesive layers, said at least one or a plurality of colored resin layers, and one or a plurality of transparent resin layers or transparent adhesive layers being co-extruded and laminated together, part of said multilayer structure in the circumferential direction of the wall of said plastic product being provided with a transparent window in parallel with the center line of said plastic product, said colored resin layer at the wall of said transparent window being removed, and the removed area being filled with said transparent resin layer or said transparent adhesive layer, wherein a flow of said colored resin is suppressed and a flow of said transparent resin or adhesive is allowed preferentially by a width corresponding to the width of the removed area near at the converging point of adjacent passages for said colored resin and transparent resin or adhesive at the co-extrusion die head.

12. A co-extruder with a co-extrusion head for co-extruding a plastic product having a multilayer structure of at least first and second co-extruded and laminated resin layers, part of said multilayer structure being different in structure from the remaining area of said multilayer structure, said first resin layer being removed at said different part, and the removed area being filled with said second resin layer, wherein said co-extrusion die head has a first resin passage and a second resin passage with a converging point, and a flow limit member is mounted on said first resin passage, said flow limit member having a width corresponding to the width of said removed area near at said converging point.
